# EUROPEAN PATENT SPECIFICATION

(11) **EP 1 200 940 B1**
(45) Date of publication and mention of the grant of the patent: **10.10.2007**
(21) Application number: 00957282.7
(22) Date of filing: 31.07.2000
(51) Int. Cl.: G07C 9/00, G07F 19/00

(54) **A SYSTEM AND METHOD FOR SECURE NETWORK PURCHASING**
SYSTEM UND VERFAHREN FÜR GESICHERTE NETZWERKSTRANSAKTIONEN
SYSTEME ET PROCEDE D'ACHAT SECURISE SUR RESEAU

(30) Priority: 30.07.1999 US 146628 P; 24.11.1999 US 167352 P; 08.02.2000 US 500601; 13.03.2000 US 523902; 03.05.2000 US 564660
(43) Date of publication of application: 02.05.2002
(73) Proprietor: Safewww, Inc., Uniondale, NY 11553 (US); EGI Internet Ltd., 46586 Herzliya (IL); Sancho, Enrique David, 30900 Zichron Yaacov (IL)
(72) Inventor: SANCHO, Enrique, David, 30900 Zichron Yaacov (IL)
(74) Representative: Neumann, Ernst Dieter
(86) International application number: PCT/US2000/021058
(87) International publication number: WO 2001/009756

(56) References cited:
- WO-A-98/47116
- WO-A-98/59455
- WO-A-99/31610
- US-A- 5 648 648
- US-A- 5 794 221
- US-A- 5 852 812
- US-A- 5 899 980
- US-A- 5 907 617

## Description

### Field And Background Of The Invention

The present invention relates to systems and methods for implementing secure purchases over a computer network. More particularly, the methods relate to a system which permits purchases of merchandise to be made over a computer network, whereby the purchaser may feel confident that personal credit card information is not at risk of being diverted, misappropriated or stolen and the vendor may be more confident that the purchaser is bona fide.

It is well known for users of merchandise to access the global client/server network commonly referred to as the Internet, a part of which is the World Wide Web, for the purpose of searching for and purchasing merchandise from on-line vendors selling wares ranging from travel services and investment services to buying CD recordings, books, software, computer hardware and the like.

Numerous patents teach methods or systems purporting to secure commercial credit card transactions carried out over the Internet. Examples of such patents include US Patent Nos. 5,671,279 to Elgamal, 5,727,163 to Bezos, 5,822,737 to Ogram, 5,899,980 to Wilf et al. and Patent Nos. US 5,715,314 and US 5,909,492, both to Payne, et al.

Document WO 99/31610 discloses a method of providing goods to users communicating via a data communication system. The communication system comprises a user's computer, a third party server and a gateway server. On request from a user's computer for a document, i.e. an HTML web page, the gateway server passes on the document request to the third party server. After the third party server having determined the price, the credit limit of the user is checked in the database. Next, the client terminal displays the HTML form to the user, requesting his confirmation or rejection of the order. If the transaction is confirmed by the user, the third party server records the transaction identity and the price code for the document requested and transmits the document to the gateway server. On receipt of the document, the gateway server debits the user's account and records the transaction identity.

Most of the disclosed systems have the disadvantage that they rely on the transmission of sensitive information over unsecured network routes and lines for each transaction. Although practically speaking, the systems which rely solely on encryption are fairly safe, there is still some risk of credit card misappropriation and there is little psychological comfort given to potential users by their knowing that encryption is being used.

Generally speaking, the internet is a network of computers, remote from one another, linked by a variety of communications lines including telephone lines, cable television lines, satellite link-ups and the like. Internet service providers (hereinafter "ISPs") provide the link to the main backbone of the Internet for small end users. The account for the end user is established in the normal manner usually by providing credit card information to the ISP by conventional means, such as by voice telephony, fax transmission or check. In most ISP-end user relationships, the ISP has been given credit card or other credit account information, which information is on file with the ISP and available to the ISP's computers. In return for receiving payment, the ISP provides a gateway to the Internet for the end-user's use. The end-user (or user) is provided with identification codes for dialling directly into the ISP's computers and software means (for example, dialler software, browser software, electronic mail software, and the like) for doing so if necessary.

Most purchases are conducted in the following manner a purchaser using a browser application on his local client computer connects via his computer's modem to a dial-up. Internet Service Provider (hereinafter "ISP") and makes connections therethrough to various Web sites, i.e. Internet server locations assigned a URL (Uniform Resource Locator) address. The purchaser selects his merchandise and the vendor usually requests payment by one of several methods, one of which usually includes payment by providing credit card information.

According to surveys and other marketing data, there always has been and there still exists a high percentage of the population which is deterred from purchasing merchandise directly over the Internet. This large percentage of the population apparently fears that, despite all the efforts at security and cryptography promised by the vendors, there still exists the possibility that their credit account information will be intercepted on-line by a third party computer hacker and used illegally, at great expense and trouble for the cardholder.

An additional anxiety-inducing factor related to merchandising over the Internet, or e-commerce, is that the vendor cannot always be certain that just because he has obtained credit card or account information, that he will actually be paid for the merchandise he ships. After all, credit card fraud and/or theft occurs regularly and may not be caught in time to stop the order from being shipped. When the cardholder discovers the theft and stops the card, it may be too late for the vendor to recover his property. At the very least, this situation leads to unnecessary aggravation and wasted resources for the vendor, credit card company and cardholder.

### Summary And Objects Of The Invention

Thus, it is an objective of the present invention to provide a system and method for potential on-line purchasers of merchandise marketed over the Internet to pay for those purchases with minimized exposure to the risk of credit card theft by electronic interception.

It is a further objective of the invention to provide a mechanism for facilitating e-commerce which will increase the confidence of the consuming public in the safety of such transactions.

It is still a further objective of the invention to provide a mechanism for facilitating e-commerce which will increase the confidence with which vendors may ship the purchased product or deliver the purchased service without fear of the payment being provided fraudulently.

It is yet a further object of the present invention to provide a site-specific and computer-specific identification confirmation system for use in a secure electronic purchasing system, or other secure electronic transaction systems like authenticating, access permission, etc.

It is indeed a further object of the present invention to provide a method for encoding downloadable content files, such as MP3 music files, graphic files, e-books and the like so that the files can only be accessed by the actual purchaser of the file and preferably only from the computer to which they were downloaded, or to a limitable number of secondary authorized devices.

These objectives are achieved by the invention disclosed herein which comprises a system and method for providing a trustworthy commitment for payment to an on-line vendor for services or goods provided to an on-line user, without having credit card information passing over the public and unsecured Internet. The system and method of the present invention as claimed in independent claims 1 and 10 provides added security and comfort by providing, among other features, the comfort of knowing that an independent, uninterested third-party is confirming the identities of the parties involved and the validity of each and every transaction, in real time, and the further security of knowing that at no time is the user's credit card information being exposed over the World Wide Web.

In one exemplary embodiment, the method takes advantage of the existing business relationships between the end user with the owners of member computers/servers who give access to the backbone structure of the Internet. As explained hereinabove, the Internet is a network of servers, remote from one another, linked by a variety of communications lines including telephone lines, cable television lines, satellite link-ups and the like. Internet service providers (hereinafter "ISPs") provide the link to the main backbone of the Internet for small end users. The account for the end user is established in the normal manner usually by providing credit card information to the ISP by conventional means, such as by voice telephony, fax transmission or check. In most ISP-end user relationships, the ISP has been given credit card or other credit account information, which information is on file with the ISP and available to the ISP's computers. In return for receiving payment, the ISP provides a gateway to the Internet for the end-user's use. The end-user (or subscriber) is provided with identification codes for dialing directly into the ISP's computers and software means (for example, dialer software, browser software, electronic mail software, and the like) for doing so if necessary.

Each time a user signs in to the ISP's computers for an on-line session, the user is assigned an Internet Protocol (hereinafter "IP") address. The user's computer transmits messages which are received by the ISP computer and relayed through the IP address and out onto the Internet to the ultimate intended recipient computer. During the entire time the on-line session in progress, the IP address does not change and is thus available as identifying information. By monitoring and occasionally re-verifying that the user's computer is still on-line at the assigned IP address, the ISP can confirm that certain activities could be attributed to the user.

This exemplary embodiment of the present invention takes advantage of the intimate relationship which is re-created every time an Internet user's computer goes online and signs into his ISP's computer by assigning to the ISP computer the function of clearinghouse and active intermediary between the user's computer and the vendor's computer. A user computer signs in to the ISP computer system and is recognized and assigned an IP address. When the user identifies merchandise or services at a vendor's website which he wishes to purchase, he sends programming to the website which selects the items and instructs the vendor's computer to generate a purchase authorization request which is sent to the ISP computer. The purchase authorization request contains information about the merchandise to be purchased, identifying information about the proposed purchaser, some of which is the identifying information assigned by the ISP to the user. The ISP confirms internally that the user is still signed in to the ISP computer system by verifying the identity of the computer currently actively communicating through the IP address. When satisfied that the user is still online, the ISP computer generates and sends a message to the user's computer requesting confirmation of the order for the merchandise. Upon receipt from the user's computer of the confirmation, the ISP generates and transmits to the vendor's computer a message confirming the order and providing a confirmation number, agreeing to pay the invoice which the vendor's computer subsequently generates and presents to the ISP computer. The ISP computer then uses the user's credit card information and presents an invoice against the credit card account to be sent through normal channels.

In another exemplary embodiment of the present invention, the ISP does not serve as the credit giver or transaction verifier/guarantor. This function is provided by a bank or vendor with whom the user already has a credit account, and who has an online presence, i.e. has a transaction server connected to the Internet which can participate in the transaction as it is carried out by the user/consumer.

Another aspect of the present invention as defined in claims 1 and 10 lies in the security provided by employing a method for verifying that the system is only usable by computers specifically registered with the system. More particularly, the method for identifying a registered computer, i.e. one which can be used for making a purchase transaction, or other electronic transaction and/or request, on the system of the invention, is constructed such that if a hacker were to try to "pretend" that his computer was in fact the registered computer of a bona fide user, the codes detect that they are no longer in their originally installed environment and the system becomes inoperable. The system can only be reactivated by reregistering the machine.

In another exemplary embodiment, the system is configured such that the request for a confirmation of a purchase transaction, or other electronic transaction, is forwarded in the form of an SMS (short message system) note to a user's cellular communications device, such as a cellular phone, alphanumeric pager or modem-equipped handheld computer. Thus, if the user was not sitting at the system registered computer, he can still be advised instantly that someone else, perhaps illegally, is attempting to fraudulently use his account or even his computer to make a purchase. This feature of the invention can contribute to deterring such computer fraud.

### Brief Description Of The Drawings

For a better understanding of the invention, the following drawings are included for consideration in combination with the detailed specification which follows:
Fig. 1 shows a user computer in communication with a vendor computer via the ISP computer, wherein user computer is initiating a purchase transaction;
Fig. 2 shows the vendor computer communicating with the ISP computer to request authorization to complete user's requested transaction;
Fig. 3 shows the ISP computer confirming that correct IP address is active with user's computer and requesting confirmation of user's transaction;
Fig. 4 shows users computer responding to ISP computer's request for confirmation;
Fig. 5 shows ISP computer's transmission of a confirmation code and invoicing instructions to vendor's computer;
Fig. 6 shows a block diagram illustrating another exemplary embodiment of the present invention;
Fig. 7 shows a block diagram illustrating another exemplary embodiment of the present invention;
Fig. 8 shows a block diagram illustrating another exemplary embodiment of the present invention;
Fig. 9 shows a block diagram illustrating the handshake and priming process of the system of the present invention;
Fig. 10 shows a user reacting remotely to fraudulent use of his PC;
Fig. 11 shows a user computer in simultaneous communication with a vendor computer and the AA computer, wherein user computer is initiating a purchase transaction; and
Fig. 12 shows a block diagram illustrating another exemplary embodiment of the present invention.

### Detailed Description Of The Exemplary Embodiments

In all of the exemplary embodiments which will be described hereinbelow, there are certain common features which, together with reference to the drawings, will be described once here to provide the reader with an easily understood framework.

As was discussed hereinabove, the present invention is designed to reduce compromising the security of one's credit account information which can be caused by transmitting the information over the unsecured World Wide Web. Additionally, the invention helps to ascertains that the parties participating in a transaction are who they purport to be.

The exemplary embodiments assume the following arrangement of the parties to a transaction: [a] a user is connected via his PC or client to the Internet through telephone, cable TV, satellite or data lines, usually through a modem and the user's client PC has installed therein a browser program, such as Microsoft Corporation's Internet Explorer or Netscape Corporation's Navigator or Communicator, an instance of which has been activated prior to the transaction; [b] a vendor has a server in communication with the Internet which constitutes or communicates a Website accessible to users' browser; [c] a security administration system operates via a security server, or toolbox (hereinafter "TB"), the physical location of which can vary as will be discussed hereinbelow; and [d] a creditor or payment guarantor has a payment server, although this function may optionally be performed by the security server. In the context of the present application, it should be understood that reference to a client or PC expressly includes any browser-equipped telecommunications device which gives the user the ability to access and interface with remote servers, and in particular Web sites on the Internet. Thus, such devices include browser-equipped cellular phones, personal digital assistants, palm held computers, laptop computers, and desktop PCs, though not exclusively.

Additionally, it should be noted here that, rather than being a vendor of merchandise, vendor might simply be a provider of an information or financial service, as example. Thus vendor might be using the present invention to ensure that access to secured databases is only to properly authorized and duly-identified persons.

All of the four components of the system employ a combination of security measures, for instance, all transmissions take place in an encrypted environment, such as RSA, Triple DES, etc., using encryption tables which are replaceable by the security server or by a central system administrator server at random intervals.

The systems are of two general kinds; where the ISP will participate in the system, giving the highest possible level of security, and where the ISP is not a participant in the system. Where the ISP is a participant, it can participate in two aspects; [1] the ISP can serve as the physical host of the TB and [2] the ISP can be the creditor or payment guarantor, since the ISP already has an ongoing service agreement with the user. Where the ISP is not a participant as a creditor or payment guarantor, this function can be served by another party. The advantage to having the ISP as participant wherein the TB is physically at the site of the ISP has been alluded to hereinabove. That advantage lies in the fact that since most users dial into an ISP's modem basket over copper phone lines, the only way for a hacker to get between the ISP server (and the TB if installed piggyback to the ISP server) and the user is to physically tap into a phone company junction box, something that most hackers would not ever do. Even if the TB is at another physical location, the system still retains effectiveness but the fewer areas open for hacker attack, the better. If the ISP is not a participant, insofar as being a creditor or payment guarantor, this function can be fulfilled by the Internet-accessible payment servers of such business entities as online banks, merchants which give their customers credit accounts and other credit-providing institutions. In such a case, the TB might be located at the site of the credit institution, or in fact a single server could act as the TB as well as the payment server. In another case, the TB and the payment server might be at completely different locations.

Before a transaction can take place, the components of the system need to be programmed and/or installed as follows:

The TB is a series of at least two servers, in addition to a Firewall Server, which includes therein a database containing the identification data of the security system's user participants. Additionally, TB can include programming to check and update the user's software version, and encryption tables and instructions to either update those tables as needed, mark them for future updating or to direct user's browser to the URL of an appropriate server, such as the central administrator server for downloading updated tables.

The vendor server is modified such that a button or other directing device is added to the purchase initiating software that gets downloaded to a user's browser from the vendor server when a user indicates readiness to pay for a transaction. The added button tells a user to click on it if payment by the secured system of the invention is desired. By clicking the button, the user initiates a series of events which will be described further hereinbelow.

The creditor server is provided with programming directing it how to respond to the request from a vendor server for payment on a transaction that is accompanied by a Gatepass code, which the vendor receives from the TB.

TB records all transaction data and assigns a unique transaction ID (UTID) to the record and further marks the record as "not yet confirmed". TB records the transaction data received from the vendor server and puts it under a URL. TB then commands Users waiting thread to come and retrieve the page at the URL on the TB and show it to User. The shown page is the Confirmation Request page which appears to user on client PC as a Pop Up window.

In the Pop Up window, User sees certain details of the transaction and text to the following effect: "We have been asked to pay a vendor $17.20 for an order from you. Do you approve the transaction?". To approve the transaction, User is instructed to input his System password (selected in the registration process) and click the OK button.
a) If User clicks Reject or does not respond within a predetermined time frame then the order is deemed not accepted and TB rejects Vendor's request for payment URL.
b) If User accepts the transaction by entering his System password into the appropriate field and clicking the OK button, it closes the Confirmation Request Page window and sends the password back to the Wallet which encrypts the password and sends it back to the TB.
c) In one exemplary embodiment of the present invention, the User can elect to additionally receive notice on his cellular phone or other cellular-enabled communication device (such as an alphanumeric beeper or an Internet-ready personal digital assistant or PDA) of the transmission of a Confirmation Request page to his PC. When User has elected this service, the transmission to his PC of a Confirmation Request page is accompanied by the simultaneous transmission of an SMS (Short Message System) message to his cellular device, thereby advising him that someone is operating his PC and conducting a purchase transaction. Using this follow-me technology, a user might then use his cellular device to respond to the SMS message with a message to cancel the transaction and/or initiate a trace of the fraudulent purchase request.

The transaction continues as follows in the embodiment wherein the Toolbox is located at the vendor or at the secure administration site, for example.

### Physical Placement of TB

In an exemplary embodiment of the invention, the TB is at the secure administration site or at the vendor site. In the case of the TB being at the vendor site, the TB is at the service provider's server. The user is not necessarily purchasing merchandise, but, for example, is making a request to the vendor server for access to secured databases contained therein or protected thereby. Thus, in order to be certain that the user has permission to access the secured databases, the vendor's server, in response to user's selecting a button indicating participation in the system of the invention, takes the information forwarded with user's selection and creates an identity verification from the TB server. The rest of the procedure is substantially the same as described hereinabove. TB receives the identification verification request, undergoes the double ping handshake procedure and upon receiving the appropriate responses from user's client PC, sends a Gatepass response incorporating the UTID back to vendor's server. At this point, vendor's server can admit user into the desired secured database. As an additional layer of protection, vendor's server might undergo a double ping handshake procedure with TB to ensure the source of the Gatepass.

As noted hereinabove, rather than being a vendor of merchandise, vendor might simply be a provider of an information or financial service, as example. Thus vendor might be using the present invention to ensure that access to secured databases is only to properly authorized and duly-identified persons. For example, a bank might want identity verification before permitting a customer access to his account information or to use financial services. As another example, a large corporation might use the present invention to give third-party verification of an employee's or outside contractor's identity before permitting them access to secured databases which might not otherwise be available via the Internet.

The TB is essentially a mini-server, dedicated to the security tasks assigned to it. The TB is provided with programming which, when activated, sends, receives and verifies the proper forms and/or data to either a participating home user, ISP server or vendor in order to carry out the proposed transaction.

The authentication agent (hereinafter "AA") is software downloaded into the client computer. AA, which will be further described hereinbelow, performs the same function as a magnetic strip on a plastic card, e.g., a credit card. This enables the AA to be employed in Internet generated automatic teller machine (ATM) applications, such as fund transfers, credit card or debit card credits or debits, without the need for physical access to the ATM.

The procedure described in this embodiment hereinabove is modified as follows:
1) In one embodiment of the present invention, AA sends SIMULTANEOUS messages to vendor and TB, so that the TB is expecting a certain message from the vendor.
2) The AA's action is described hereinbelow. In the claimed embodiment of the present invention the AA is a COM object which creates a "digital fingerprint" consisting of various identifying hardware characteristics which it collects from the user's PC, as well as passwords (to be described further). Activation of the account initiates a process by which the TB records a fingerprint for the user, which the AA has derived, including a unique identification ("UID") for the user, using the identifying characteristics of user's PC (e.g. CPU ID number, hard disk serial number, amount of RAM, BIOS version and type, etc.).
3) When a transaction starts, the user's AA, which is a simple DLL, is activated by the vendor script. The AA sends a message to the Toolbox server, using the server's public key. If the server answers the AA , the home user's computer knows that it is talking to the correct server, since only the Toolbox has the private key that can decrypt the message sent with its public key. The Toolbox server now sends the user half of a new Triple DES key that it has generated so that the home user can communicate with it securely. Next the TB asks for the user's OTP (one time password) which is stored on a configuration file in the home user's computer. This configuration file can only be opened by a combination of personal password and CPU id. If the home user's computer responds with the correct password, the TB knows it is talking to the correct user. Once the TB has verified that it is talking to the correct user, the TB sends a dynamically generated smart DLL to collect the computer's hardware signature, verifying that it is also talking to the correct machine. The TB also records the number of encounters with the user. Any hacker who manages access probably fails this check, and is thereby discovered. The configuration file, which contains the account ID, machine ID, and a replaceable one-time password, among other items, can be stored optionally on user's computer's registry, or on the hard drive or on a removable floppy, i.e., the configuration file can be removed and taken away from the proximity of the user's computer, thereby disabling the user's access to the account from that computer.

When registering for the first time, and also when authenticating a user, the simple DLL loads itself into memory, and calls a "smart" DLL, from a collection of thousands of continuously regenerated smart DLL's, which collects a large number of different parameters, for example 12, identifying the user's computerA simple example of an authentication transaction is now described using two machine parameters. the DLL applies an algorithm such that if the disk serial number is 1 and is multiplied by 1; and if the CPU serial number is 2 and is multiplied by 2, the resulting string is their sum, or "5". Thus, 1(1) + 2(2) = 5. This information is hashed by the DLL according to that DLL's hashing programming, then encrypted, and the encrypted hash is sent back to the TB The order of the parameters and the algorithm used can change each time. Futhermore, the actual information is further interspersed with "garbage" code, expected by the TB, every time. The server receives the hashed and encrypted result from the smart DLL, and compares it to the result which it expects to receive. This is done by the TB by calculating the expected result by running it's own copy of the unique DLL on the user's identifying parameters that it has stored in the database. It then hashes the result, and compares its hash to the deencrypted hash string it received from the user.

An exemplary embodiment of the present invention, more specifically uses a 2048 bit RSA key to initiate the handshake, and thereafter moves to Triple DES encryption. The Public Key is distributed to all the end-users with the Agent and the Private Key(s) are held by the AA Server. There is a different set of Keys for different Providers, i. e., Credit Card Companies, Banks, etc.

The TB can be used to verify a digital fingerprint in various forms of Internet transactions, for example:

### Banking and Financial Services

A bank or financial institution can use digital fingerprints to provide customers with secure access to their accounts for stock transactions and account management. Customers can use their digital fingerprints as a universal log-in at the bank's Web site for quick access to their account information without having to remember a unique log-in name and password. To further enhance each user's experience, the bank can provide targeted content and services to its customers based on the registration information contained in their digital fingerprints. The bank can also use digital fingerprints to send secure e-mail, allowing it to proactively send private account information to its customers.

### Retail

A manager of a online retail store can watch customers browse merchandise, identify purchase patterns, observe the behavior of casual visitors, and set up accounts for purchases. A manager of a retail Internet site can perform these same functions online by using digital fingerprints. By implementing client authentication with digital fingerprints, the retail site can analyze customer interests and behaviors, track and compare the profiles of visitors who browse and those who actually place orders, and perform market analysis and segmentation based on information presented in its customers' digital fingerprints. The site can extend the power of digital fingerprints by linking the ID to information in its existing customer database (e.g. customer's account, order status, or purchase history).

Additionally, by using the one-step registration feature of digital fingerprints, the site can quickly find out information about first-time visitors to the site. The site can use this information to provide relevant content to these visitors, thus capturing their interest and increasing the likelihood that they will become customers.

The authentication and security associated with digital fingerprints can allow the site to verify the identity of a customer, eliminating consumer misrepresentation and false orders. Additionally, consumers will have more confidence in conducting transactions on the Internet.

### Publishing and Subscription

An online newspaper depends on advertising and subscription revenues. Digital fingerprints can allow this site to use basic registration information that is in a digital fingerprint - country, zip-code, age and gender - to understand the profile of its visitor population, thereby increasing the value of the advertisement placement and the amount that can be charged for the advertisement.

The site can use the universal log-in feature of digital fingerprints for identifying its site subscribers. Site visitors no longer need to remember unique log-in names and passwords for the site, and the site no longer needs to maintain a costly log-in and password database. By understanding the profile of its first-time customers, and providing tailored information based on the basic registration information in a digital fingerprint, the site can use digital fingerprints to help it acquire new customers.

### Services

A service company, such as a delivery company, can use digital fingerprints to provide secure access to its Web site, allowing customers to track their shipments without having to enter user names or specific tracking information. Digital fingerprints can allow this site to provide a highly customized experience to its visitors, for example, by providing specific delivery rates based on the geographic location of the customer. Digital fingerprints can also enable the site to send secure e-mail with billing information to its customers.

### Business-to-Business

With the level of authentication provided by digital fingerprints, a manufacturing company can allow portions of its Internet site to be updated by its business partners and accessed by its customers. The manufacturing company's suppliers can update their product availability and scheduled shipping date in the manufacturers database, providing a more efficient means for inventory management Additionally customers can track order status through the same online database. These types of transactions would not be possible on the public Internet without the use of digital fingerprints to authenticate the identity of the company's suppliers and customers.

### Music, Picture, Video, or e-Book File Sale and Download

Another possible application for the unique hardware fingerprint is to use it as a lock and key for preventing unauthorized downloading, copying and playback of content files, such as MP3 music files, e-book files, graphic files, etc. The fingerprint could be associated with the downloaded file and attempting to open the file on a machine which does not bear the fingerprint results in the file being permanently locked, unusable or somehow otherwise disabled. The fingerprint coding can determine whether the downloaded file can be copied to and played on a limited number of secondary machines. In fact the encoding could initially be used to determine that the person downloading the file is the person even entitled to do so.

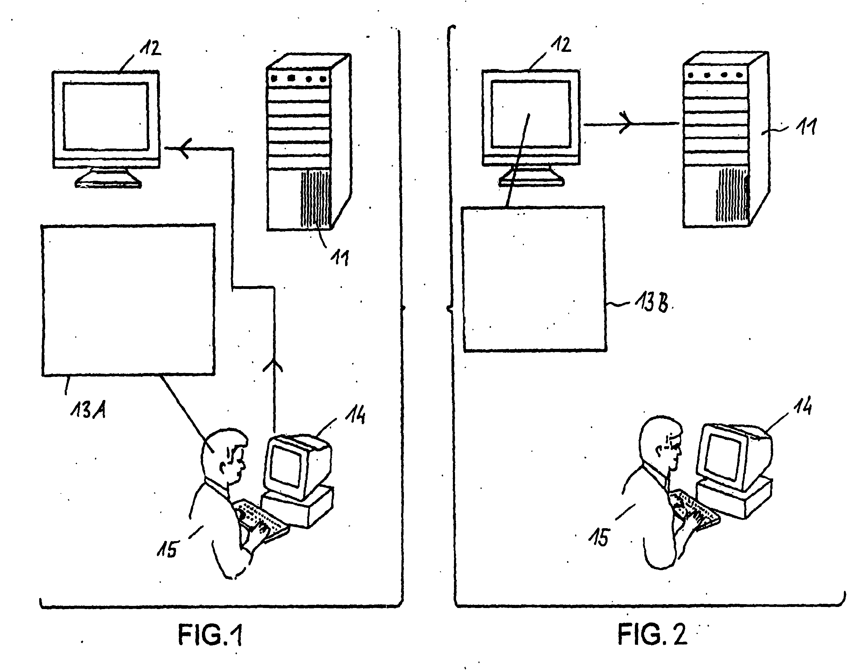

A first example of a transaction using the invention can be seen in figures 1 through 5.
Figure 1 illustrates the user 15 contacting a vendor 12, an example of the contact includes transmitting information 13A such as "I am Mr. Smith, ID# 16495358-4379, IP: 154.255.498.643, I would like to purchase a Beatles book, Item number 6546/12, Price $30".
Figure 2 illustrates the vendor 12 contacting the ISP 11 to request authorisation to complete user's requested transaction, an example of the contact includes transmitting information 13B such as "Your customer number 4376, IP: 154.255.498.643, Wants to make a $30 value purchase, Do you accept this purchase?".

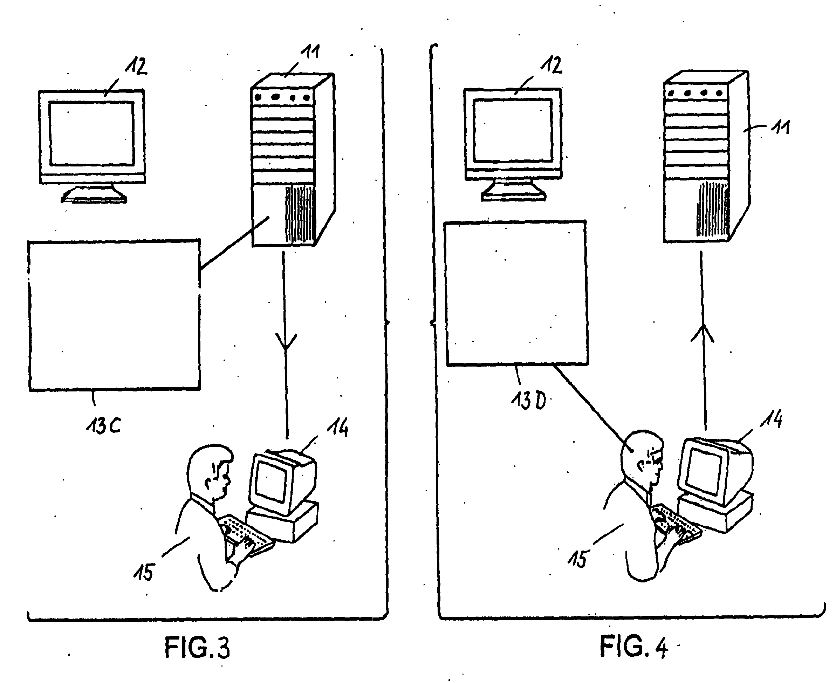

Figure 3 illustrates the ISP 11 checking that correct IP address is active with user's computer and requesting confirmation of user's transaction, an example of the verification request includes transmitting information 13C such as "Mr. Smith do you accept a $30 value purchase that you made in the Amazon Book Shop? If yes enter your password."
Figure 4 illustrates the user 15 computer responding to ISP's request for confirmation, an example of this verification includes information 13D such as "I do accept a $30 value purchase that I made in the Amazon Book Shop. My password is *****.".

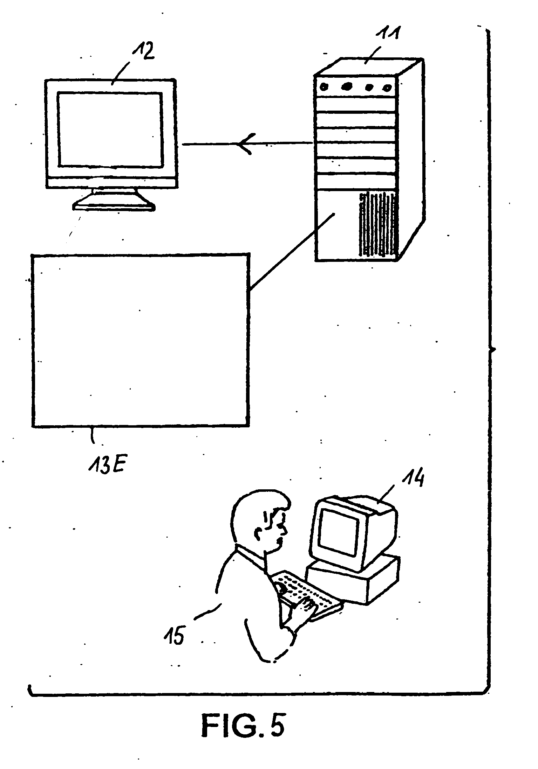

Figure 5 illustrates the ISP 11 transmitting a confirmation code and invoicing instructions to vendor's computer, an example of this confirmation includes information 13E such as "Confirm transaction# 123456789, Send invoice to ISP# 16495358.".

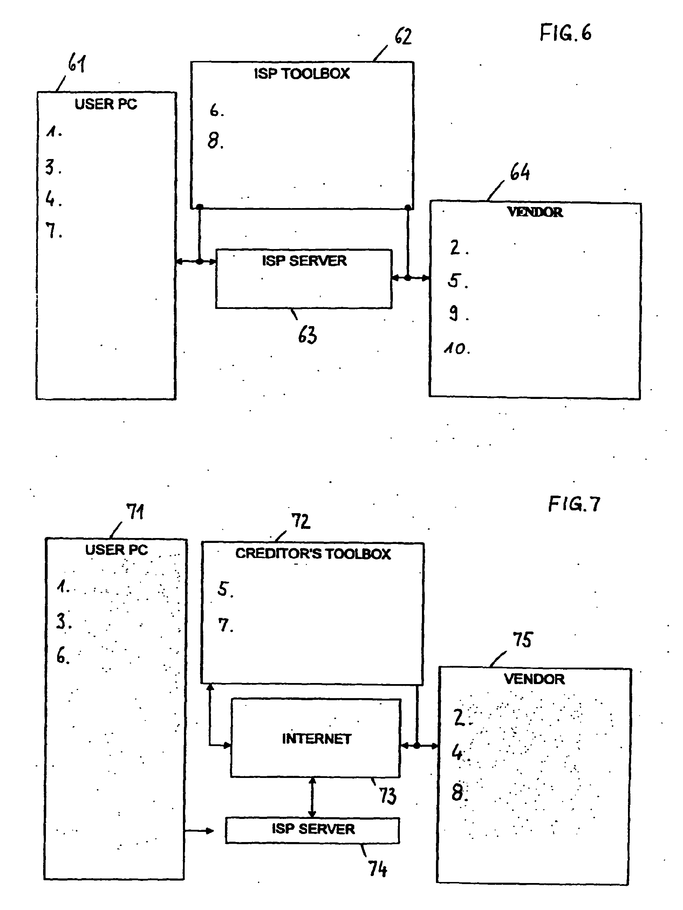

A second example of a transaction using this invention can be seen in figure 6. The transaction proceeds as follows:
1. The user PC 61 goes to the website of vendor 64 using web browser program and selects merchandise to purchase.
2. The vendor 64 offers user PC 61 methods of payment.
3. User selects AA option for AA and activates script which searches users PC 61 for installed AA software.
4. "Do you want form filled with info from wallet? Yes - information (UID, Name, billing and shipping address, ISP-ID) extracted from wallet and filled into form and form sent to vendor/vendor. Onhandler script tells wallet to execute pay command. This returns random number to script and starts thread that waits for event from network.
5. Vendor 64 receives form with info and adds info about cost of purchase, optionally adds merchandise info and sends it to the specific ISP Toolbox 62 specified by ISP-ID from Wallet.
6. Toolbox 62 activates server wallet that contacts user PC wallet. Toolbox 62 validates user hardware ID, UID and if validated it instructs Wallet to open an new browser window having URL to page showing positive result of handshake.
7. If handshake was positive, then wallet displays confirmation page with transaction received by toolbox 62 from vendor and user 61 is required to confirm order by typing in current password (selected at installation or changed during maintenance) or to deny the order.
8. Confirmation is received by Toolbox 62 and then Toolbox 62 sends gatepass response to vendor 64.
9. Vendor 64 receives gatepass and advises user that transaction has been approved.
10. Gatepass is then forwarded to a central clearinghouse server which receives gatepass and initiates payment to vendor 64. Gatepass can be provided with expiration time. Clearing house server can be ISP server 63 or fourth party server.

In another embodiment the ISP is not the site where the Toolbox resides. With reference to Fig. 7, The Toolbox could be physically located at the site of the credit provider ("Creditor"), e.g. online-enabled bank, credit card provider or other affinity-card or charge account provider (including brick-and-mortar retailer's with an online presence such as Macy's) and in communication through normal channels with Creditor's transactional server. In this case, the ISP would not be an active part of the purchase transaction, other than in the usual known way by giving User access to the Internet. Generally, except as specified hereinbelow, the rest of the process proceeds substantially as described hereinbelow. Specifically, in this exemplary embodiment, the account is set up as follows:

### Installation Process:

1) A user requests to join the system, via an ASP page on a web server, over an HTTPS connection.
2) The applicant receives an account ID, and his application information is stored in an applicant's database on an application and database server, behind a firewall. The system owner, which can be an ISP, bank or other financial provider accesses this database from another web page, located on a Web server behind a firewall on an internal LAN.
3) When the system owner approves the user's application, the system automatically sends the user an email containing a link to a unique URL where he can begin the registration process. It also generates a one-time activation key linked to the user's account. The system owner must give this one-time activation key to the user in a secure way (for example, in person, or via a printout from his automatic teller). Possession of the one-time activation key constitutes proof that the user is who he purports to be during the activation stage.
4) When the user goes to the URL, and presses the "Activate" button, the activation process begins by downloading a DLL containing a COM object to his computer. Dynamic Link Library (DLL) refers to the ability in Windows and OS/2 for executable memory to call software libraries (i.e.. subroutines, or code for accomplishing specific functions) not previously linked to the executable. The executable is compiled with a library of "stubs" which allow link errors to be detected at compile-time. Then, at run-time, either the system loader or the task's entry code must arrange for library calls to be patched with the addresses of the real shared library routines, possibly via a jump table.
5) This COM object relays the user's account ID (which it knows because he has been directed to a unique URL) to a "listener." This listener contains a proprietary communication protocol to enable the authentication web servers in the DMZ to communicate securely with the authentication application server and database server behind the firewall. The listener asks the applicant database behind the firewall to validate that the account ID it has been given is legal, and not yet activated. If so, the listener tells the COM object to send a pop-up to the user, to collect the one-time activation key. If not, the activation process stops. De-Militarized Zone (DMZ) is from the military term for an area between two opponents, where fighting is prevented. DMZ Ethernets connect networks and computers controlled by different bodies. External DMZ Ethernets link regional networks with routers to internal networks. Internal DMZ Ethernets link local nodes with routers to the regional networks.
6) If the key collected by the popup matches what is stored in the database for the user's account, the DLL proceeds to collect the user's hardware signature (12 parameters including CPU ID, BIOS ID, disk volume information, various serial numbers etc.) and send it back to the database. If the key does not match, or the user does not answer within a set time limit, the activation process stops. After a set number of failed tries, the user's account is disabled.
7) If the key matched, the DLL then returns a seed for an encrypted one-time password (OTP) for use during the next encounter. Another pop-up is sent to collect a personal password chosen by the user, which is known only to the user, and not stored anywhere.
8) After the personal password has been collected, a configuration file containing, among other things, the OTP, which has just been exchanged, is encrypted. The account is then marked as active. On the next encounter, the one-time password just exchanged will be used as part of the authentication process. The key to opening the configuration file is the user's personal password together with parts of his computer's hardware.

Once the installation has been completed, the software components remaining on the home user's computer are the configuration file and the DLL containing the COM object.

The COM object contains a self-validation routine, which lets it make sure that it has not been tampered with when it is loaded into memory, and a routine to establish a secure communication channel after it has made sure that it is intact. The secure communication channel is used to call a dynamically generated DLL from the server. In all future encounters, this dynamically generated DLL does most of the work in collecting information for the authentication process.

The other components of the COM object are a locator, a profile manager and a payment method manager.

The locator ensures that the latest version of the software is installed, and
locates the profile manager and the payment method manager for a home user.

The locator has two interfaces implemented via the agentClassld property and the agentCodeBase property.

AgentClassld specifies which payment method manager and which profile manager to use. AgentCodeBase specifies which server holds the most updated version of the software, and compares what is installed to latest version. If the latest version is not installed, agentCodeBase installs it automatically. (This feature is supported under Internet Explorer, versions 4 and 5 and Netscape 5). This enables us to control what information is supplied to vendors while allowing vendors to code one standard line of code that never changes.
AgentClassld has five methods: get attribute, set attribute, set parameter, stop payment, and pay.
*Get attribute* is a method to get non-sensitive information such as name, shipping information, etc.
*Set attribute* helps a browser page put this information into the user's computer.
*Set parameter* helps configure the profile.
*Stop payment* lets the user stop in the middle of a transaction, once the pay method has been invoked.
*Pay* is responsible for establishing a secure communications channel, and returning the buyer's hardware signature and password on that channel.

The Payment Method Manager enables the choice of more than one payment option.
The profile manager allows different people to use the same hardware. One account may have multiple users, with multiple shipping addresses or billing addresses. A user may also choose to use billing information from a previously existing wallet such as Microsoft wallet, via the profile manager.
Transaction Cycle

### Step 1- Customer Starts the Login Process at a Bank or Vendor

The first step occurs when the customer contacts a bank or vendor with vendor script installed and attempts to log in. This activates script, which was copied and pasted into the bank or vendor's ecommerce application.

### Step 2 - The Customer Contacts the TB

The script activates code, which contacts the DLL installed with the buyer's home software, and tries to load the COM object into memory. When the COM object is loaded into memory it runs an integrity test to make sure that it has not been tampered with. If the checksum is correct, it leaves the result in memory, so it can pass it later to the authentication server. Otherwise, it returns an error that disables the user's account and stops working.
If the COM object succeeds in verifying that it is intact, Pay attempts to contact a "listener" on the TB and establish a secure TCP/IP communication channel. It contacts the TB using the TB's public RSA key, passing to it the user's account and machine IDs. The listener sends a request to validate the customer's account number and machine ID number to the application database, where the user's installation parameters are recorded. If they are valid, the listener asks the COM object for an encrypted one-time password. This password is generated from a seed that was stored in a configuration file on the user's computer and in the TB's user database during the last exchange between them. This one-time password is "unlocked" for use by the user's personal password, known only to him, and stored only in his mind, and by the CPU Id of his computer. (When the transaction is an installation, and there has been no prior exchange, a first time activation key received from the owner system takes the place the place of the one-time password.)
If the numbers do not match, or if the user does not answer within a set time limit, the home user software sends back an error message, the account is temporarily disabled, and a log is created.
If the numbers match, the COM object knows that it is talking to the TB, since only the TB can decrypt messages sent with its public key, and the TB knows that it is talking to the right person since only he can "unlock" the one-time password. Using RSA encryption, a shared secret key is now exchanged using a Diffy-Helman key exchange on this channel, and the encryption method switches to triple-DES. (In triple DES encryption, the encryption keys change several times during the transmission.)

### Step 3 - The TB Authenticates the Customer

Now that a secure channel exits, the listener on the TB sends a dynamically generated DLL to collect the home user's hardware signature information. This DLL is unique to each transaction. It returns signature in a string which is uniquely scrambled for each transaction and encrypted.
If all of the parameters match, the TB's authentication server can be sure it is talking to the correct customer, who is communicating from the correct computer. The TB returns a valid transaction ID to the customer, who passes it to the bank or vendor. In the bank model, the thread is closed, and an object on the server waits for the bank to inquire about the transaction.

In the ISP or ecommerce model, the thread remains open, waiting for an order to issue a pop-up window to the user to validate purchase details for the transaction.

### Step 4 - The Bank or Vendor Contacts the TB to Verify the Transaction

### Bank or Pure Authentication Model

The bank or other vendor passes customer's account ID, machine ID, Listener ID, Provider ID and transaction ID to the TB. If these match what was stored in the database when the customer was authenticated, in the pure authentication model, the process ends here. A log-in transaction is validated and the customer continues on to carry out his transactions using the owner's proprietary system, whatever that may be.
Optionally, the TB may send the customer an SMS message notifying him of the transaction

### ISP or Ecommerce Models

In the ISP and other Ecommerce models, payment details and credit availability must be validated in addition to user identity. In addition to the customer's account ID, machine ID, Listener ID, provider ID and transaction ID mentioned above, the Vendor passes the payment details (invoice number, invoice amount, currency) to the TB's authentication server. A new pop-up window is sent to the user on the secure channel previously established by Pay, asking him to authorize the invoice details. (As noted above, if the user does not answer within the set period of time, or rejects the transaction, the process is stopped and the thread dies). If the user accepts the transaction by clicking on the "Accept" button, TB's authentication server contacts a Payment server, and verifies that the user has credit available. If so, a transaction debiting the user and crediting the vendor is issued to the customer's chosen financial provider.
Lastly, the TB notifies the vendor that the transaction is valid and the customer that a successful transaction has been completed. Optionally, the TB may send the customer an SMS message notifying him of the transaction.

With reference to FIG. 7, it can be seen that a typical purchasing session in this exemplary embodiment proceeds as follows:
1. Online user 71 goes to website of vendor 75 using Web Browser Program and selects merchandise to purchase.
2. Vendor 75 server offers user PC 71 methods of payment.
3. User selects AA option for making payment which activates script in BC which searches User's PC 71 for installed AA software. User is asked "Do you want form filled with info from wallet?." A "Yes" causes the information (UID, Name, billing and shipping address, ISP-ID) to be extracted from wallet and filled into the form and the form is sent to vendor/vendor. Onhandler script tells Wallet to execute pay command. This returns random number to script and starts thread that waits for event from network.
4. Vendor 75 sends request including IP address of user PC 71 and UID to toolbox server 72 for confirming user's identity and for payment gatepass.
5. Toolbox 72 receives request from vendor's server 75. Toolbox 72 twice sends handshake and primer transmission to IP address provided by vendor server 75. Successful confirmation results in instructions to wallet to open new browser window having URL to page showing positive result of handshake.
6. If handshake was positive then wallet displays confirmation page with transaction info received by toolbox 72 from vendor 75 and user 71 is required confirm order by typing in current password (selected at installation or changed during maintenance) or to deny the order.
7. Confirmation is received by toolbox 72 and then toolbox 72 checks credit of user and sends gatepass response to vendor 75.
8. Vendor 75 receives gatepass and advises user 71 that transaction has been approved. Gatepass is then forwarded to a central clearinghouse server which receives gatepass and initiates payment to vendor. Gatepass can be provided with expiration time. Clearinghouse server can be ISP server 74 or fourth party server.

More specifically, the proceeding is as follows:
a) User PC goes online and user points his browser to the Website of a Vendor server using any Web Browser Program; downloads files depicting merchandise for sale and selects merchandise to purchase which generates a purchase request to Vendor's server, all in a manner well known in the art
b) Vendor's server sends back to user PC an order page or pages which typically includes a transaction number, the value of the order, and asks for billing information, shipping information. At some point, user is offered to indicate her desired method of payment and selects option button which designates the AA payment plan of the present invention, e.g. "AA OPTION".
c) Selection of the "AA Option" generates a message back to Vendor's server which includes user's IP address and instructs Vendor's server to forward a request to Creditor's Toolbox to confirm that the user at the IP address provided is (a) actually and actively online and trying to make this purchase, and (b) that the user at the IP address has the necessary credit to make such a purchase.
d) Upon receipt of the request from Vendor's server, Toolbox immediately sends a transmission to the IP address provided by Vendor's server. The transmission includes files which (a) search for, decrypt and read the UID files in user's PC to see who it is, (if the PC is a machine registered in the system) and (b) which generate a Pop-up message on the registered user's browser to make sure that the transaction is desired by the AA system registered user. The message advises that a transaction having a particular value is being requested and asks for confirmation or rejection of the transaction. To reject the transaction, user can actively Reject by pressing a Reject button or simply by not responding within a pre-determined default time.. To accept the transaction, the user must provide his user password and submit the form back to the Toolbox. The form is accompanied transparently by the fingerprint file containing the UID and other machine identifying information decrypted and extracted from user's PC by the transmission from the Toolbox.
e) If accepted by user, then Toolbox checks database to make sure user's credit limit is not exceeded and sends a coded confirmation to Vendor's server that the transaction is confirmed and will be paid for by Creditor on behalf of user. Vendor then sends HTML message to advise user that the identified transaction has been successfully processed.
f) As described hereinabove, if user either actively Rejects or fails to respond to the Pop-up message in a predetermined time period, for example, 2 minutes, the Pop-up message disappears and Toolbox advises Vendor's server that the transaction is not accepted. Optionally, provision can be made where user can label a tendered transaction as "suspicious" and reject an order with prejudice, thus alerting both Toolbox and Security Program Manager, and therefore Vendor, that some attempt was made to defraud Vendor.. Obviously, this knowledge can provide great benefits in aiding to track down cyber credit frauds and inhibit criminal activity.

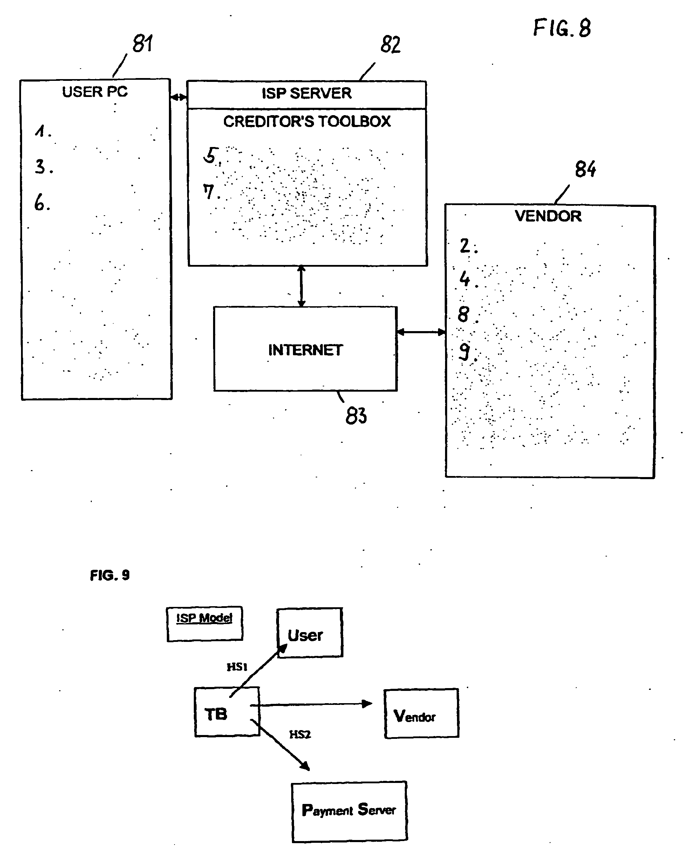

Another example of a transaction using the invention can be see in figure 8. The proceeding is as follows:
1. Online user 81 goes to website of vendor 84 using web browser program and selects merchandise to purchase.
2. Vendor 84 offers user PC 81 methods of payment.
3. User selects secured system option for making payment which activates script in user computer 81 which confirms PC fingerprint and puts User PC 81 into wait mode and sends UID to vendor's server 84 which activates script in vendor's server 84.
4. Vendor 84 receives UID and sends request including UID, IP address and transaction information to toolbox server 82 to confirm user computer's identity and to get gatepass for getting paid from creditor payment.
5. Toolbox 82 receives request from vendor's server 84. Toolbox 82 twice sends handshake and primer identification numbers transmission to IP address provided by vendor server 84. If correct; gatekeeper gives toolbox 82 access to waiting thread and Wallet. Toolbox 82 confirms digital fingerprint and if validated, instructs wallet to open new browser window and show confirmation request page to user 81.
6. If handshake was positive, then wallet displays confirmation page with transaction info received by toolbox 82 from vendor 84 and user is required confirm order by typing in current password (selected at installation or changed during maintenance) or to deny order.
7. Confirmation is received by toolbox 82 and then toolbox 82 sends gatepass response to vendor 84.
8. Vendor 84 receives gatepass and advises user that transaction has been approved.
9. Gatepass is then forwarded to a central clearinghouse server which receives gatepass and initiate payment to vendor 84. Gatepass can be provided with expiration time. Clearinghouse server can be ISP server 82 or fourth party server. Optionally, creditor server may initiate handshake and primer routine with toolbox server 82 to confirm gatepass authenticity.

In yet another exemplary embodiment, the Creditor server is also an ISP server, or at least they are at the same location and being serviced by the same modem basket. The Toolbox is still situated at that location as well. Thus, a bank which offers ISP services to it's on-line customers can also offer them the safety of the AA transaction system and method, which is carried out by the Toolbox right on the bank's/ISP's premises.

The transaction continues as follows in the embodiment wherein the Toolbox is located at the ISP. hereinafter the ISP-Toolbox Model.

As was mentioned hereinabove, TB receives the encrypted password from the wallet if user accepted. TB can further have the ISP server verify that the IP address of the user has not changed during the course of the transaction. TB uses the encrypted password to change mark on transaction record from "not yet confirmed" to "Confirmed". The transaction record,was assigned a unique ID number (UTID) which also serves as the Gatepass number and which is now sent to the vendor server.

Vendor server receives the Gatepass number and forwards it to creditor or payment server ("PS"), together with the amount to be paid and a vendor-assigned purchase transaction number.

For extra security, it is preferable that PS confirm the Gatepass with TB using the double handshake and priming routine with TB, similar to that performed between TB and user's client PC. PS sends 2 ping numbers (first ping number was previous payment transaction's second ping number and present second ping number will be used as first ping number in next payment transaction), repeats sending both ping numbers, then, when TB responds by sending back second ping number, PS sends Gatepass received from Vendor together with transaction information. Optionally, when PS is registered as a participant in the security program, similar software agents and wallets could be installed on the PS so that TB can confirm PS identity after the handshake process using hardware fingerprints.

TB checks TB server database and if Gatepass and transaction information match the transaction record, then TB sends response to PS indicating that user has confirmed the desire to close the transaction and PS is authorized to charge User's account for the order. TB records on the transaction record that the payment request has been tendered and approved.

### Physical Placement of TB

In one exemplary embodiment, the TB is located at the physical site of the ISP, optimally connected to the phone or communication lines coming into the ISP server directly from users on one side of ISP server. The TB is also connected to lines going out to the Internet (via the modem basket) from the ISP server. The TB does not interact directly with the ISP server. For the most part, it monitors incoming and outgoing traffic, waiting to take over those communications should a security related transaction be called for by a home user.

The following scenario describes an exemplary embodiment of the process inititated when a request for a security related transaction is detected by the TB located at the ISP.. As will be further described hereinbelow, in another exemplary embodiment, the Toolbox might not be located at the ISP but at the site of another credit provider.
a) User directs his browser to the URL of a vendor server and selects merchandise to purchase.
b) User is offered methods of payment and selects option button for "SECURITY PROGRAM MANAGER" or "AA PAY OPTION".
c) In an Autofetch process, an OnChange script handler in User's software prepares and sends request to central system administrator server for Session User Identity.
d) Central system administrator server redirects request to user's TB equipped ISP.
e) TB searches its files and returns user's identity..
f) A user form is generated by user's computer and populated with user information including identity returned in step (e) from ISP TB.
g) The form is submitted, together with a challenge which is forwarded to the vendor server.
h) Vendor server runs a script that calls the central system administrator server's getGatePass.asp, thereby transmitting the Session User Identity, IP (user's current IP address), Sum of the transaction and the challenge.
i) The central system administrator server redirects the vendor server's call to the ISP identified by the IP while the user stands by.
j) The TB at the ISP receives the getGatePass.asp and runs a check of the IP provided as part of the vendor server's call against the internally known IP to make the sure that is where the user really is logged in. If the IP test fails, the vendor server receives a rejection notification from the ISP server and the transaction is terminated.
k) If the IP test succeeds (i.e. the user really is connected to the correct IP address) then the ISP challenges the home listener.

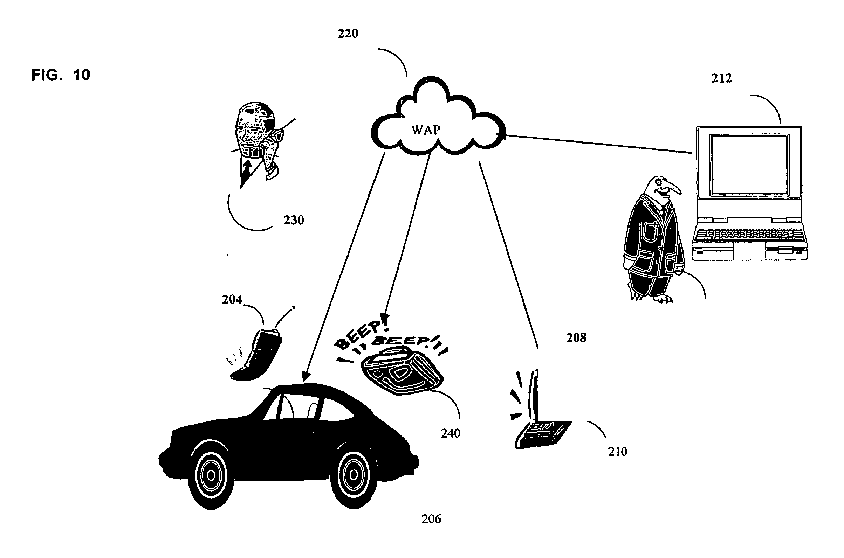

Figure 10 illustrates a situation where client 204 is located remotely from his PC 212, for example driving his car 206. An intruder 208 has gained access to his PC 212, and has fraudulently attempted a secure transaction. The AA communicates a message accordingly to client 204 via the Internet 220. The client can be remotely contacted, for example, through his cellphone 230, his pager 240 or his PDA 210. Client 204 is shown receiving the message through his cellphone 230.

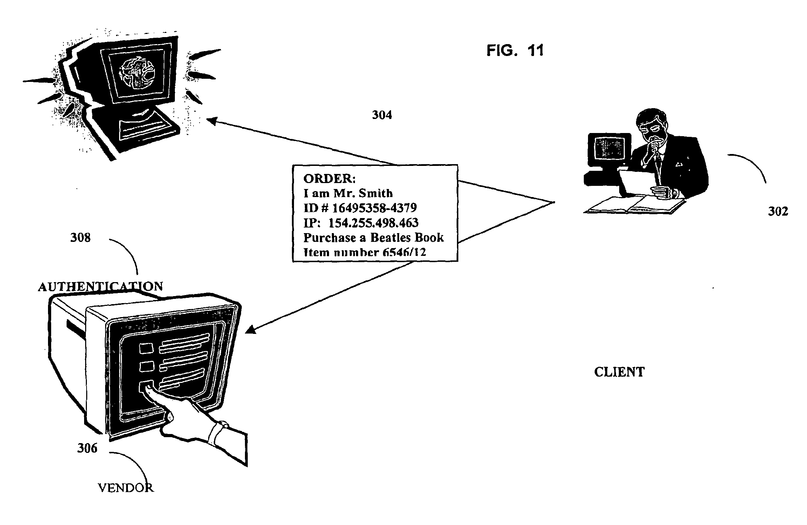

Figure 11 illustrates client 302 sending a simultaneous message 304 to AA 306 and vendor 308.

The fingerprint mechanism of the present invention can be adapted for use to ensure ownership rights in downloaded copyrighted material, such as content files which includes MP3 music files, e-books, graphic files, and the like. In the event a content file is to be purchased by a user, for example, if a user orders an MP3 file, the user is directed to a URL address for downloading the file. The digital fingerprint provided by the smart DLL in the user's PC is incorporated into code in the content file itself. Thus, the file is only downloadable if the fingerprint information encoded into the file matches that of the user's PC. Additionally, the content file can be encoded to limit how and where the downloaded file can be accessed and operated. The encoding can determine whether or not the file can be transferred to a limited number of other PC. Alternatively, the ID is associated with a diskette, as described hereinabove, and may be transferred to a limited number of PC's or perhaps only to one other MP3 player (or PDAs in the case of an e-book).

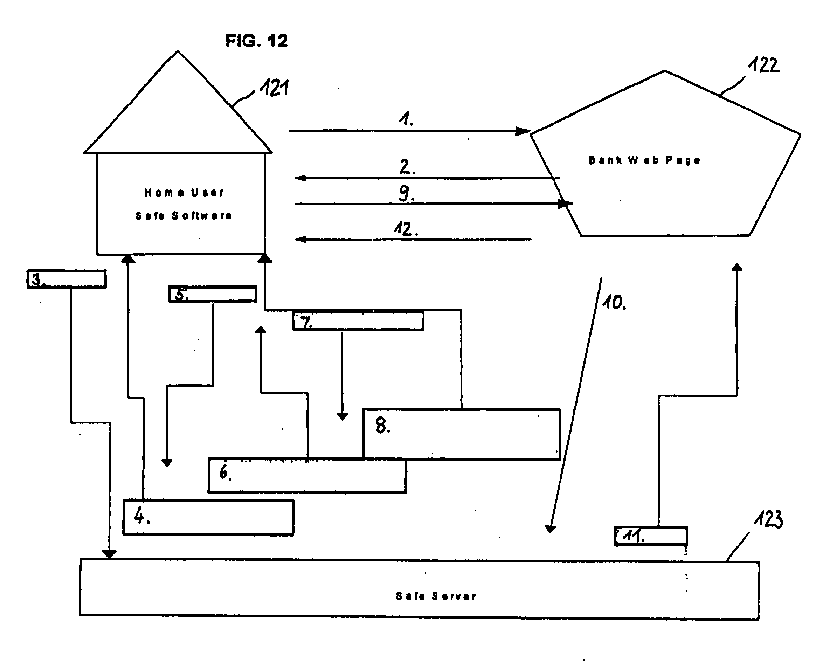

Another example of a transaction using the invention can be see in figure 12. The proceeding is as follows:
1. The home user 121 sends a request to the user's bank web page 122 an example of this request could contain information: "Log me in please".
2. The bank web page 122 sends a request to the home user 121 an example of the request could contain information: "How do we know it's you? Let's check with Safe".
3. The home user 121 sends the safe server 123 the home user's account information an example of the account information may contain information: "Hello, I am account no. 456".
4. The safe server 123 sends the home user 121 a request for the home user's 121 one-time password, an example of this request could contain information: "Please give me your onetime password".
5. The home user 121 sends the safe server 123 its password.
6. If the password sent in the previous transaction is correct the safe server 123 sends the home user 121 an acknowledgment that the password is correct and a request for the home user's 121 hardware signature an example of the acknowledgment and request for hardware signature could contain information: "It's right. Give me your hardware signature".
7. The home user 121 sends the safe server 123 the home user's hardware signature.
8. If the hardware signature is correct then the safe server 123 sends the home user 121 a confirmation that the hardware signature is correct and a transaction number, an example of the confirmation and transaction number could include: "It's right. Here is a valid transaction number certifying that you are you".
9. The home user 121 sends the bank web page 122 a confirmation, an example of the confirmation could contain information: "It's me (transaction ID)".
10. The Bank Web page 122 sends a request to the safe server 123 to confirm that the transaction number sent to the safe server 123 by the home user 121 is valid an example of this request could contain information: "Is this a valid transaction ID?".
11. If the transaction number sent in the previous transaction is valid then the safe server 123 sends the bank web page a confirmation that the transaction ID is valid an example of this validation could contain information: "It is".
12. The bank website 122 sends the home user 121 authorization to log in an example of the authorization could contain information: "You are cleared to login".

## Claims

1. A system for permitting a secure electronic transaction on a public computer network, said network comprising a user's computer (14, 61, 71, 81) and a vendor's server (12, 64, 75, 84) and further comprising a toolbox server (11, 62, 72, 82) and a creditor server (72, 82), or a single server (82) acting as a toolbox server as well as the creditor server,
**characterised in that**
said user's computer (14, 61, 71, 81) has an authentication agent which creates a digital fingerprint of the user's computer hardware characteristics, said toolbox server (11, 62, 72, 82) being adapted to verify the user's computer hardware characteristics through the digital fingerprint and the user's computer hardware characteristics stored in the toolbox server, whereby in response to a request for a transaction issued from said user's computer (14, 61. 71, 81) to the toolbox server, said toolbox server (11, 62, 72, 82) upon positively identifying said user's computer hardware characteristics, requests a confirmation from said user's computer (14, 61, 71, 81) of said transaction and upon receiving said confirmation provides said vendor's server (12, 64, 75, 84) with a gatepass for receiving a payment commitment from said creditor's server (72, 82).

2. A system according to claim 1, wherein said toolbox server (11, 62, 72, 82) authenticates the user's computer (14, 61, 71, 81) via a gatekeeper stored in the user's computer.

3. A system according to claim 2, wherein said toolbox server (11, 62, 72, 82) transmits to said gatekeeper a first identification number for authenticating the user's computer when registering to join the system and second identification number for priming said gatekeeper for authentication of the user's computer on a subsequent encounter between the user's computer and the toolbox server.

4. A system according to claim 1, wherein the transaction is for obtaining access to a secured database via a public computer network.

5. A system according to claim 1, wherein the transaction is for making a purchase of goods or services.

6. A system according to claim 1, wherein the transaction is for downloading copyprotected content files from a computer network, whereby said files will only be downloadable by said user.

7. A system according to claim 6, wherein said downloaded files can only be played on a user computer (14, 61, 71, 81) having the digital fingerprint encoded into said file by said vendor server (12, 64, 75, 84).

8. A system according to claim 7, wherein said downloaded files can only be copied in a limited number of times directly from said user's computer (14, 61, 71, 81) onto other secondary devices, said limited number being determined by said digital fingerprint.

9. A system according to claim 1, wherein said confirmation request is contemporaneously sent to a cellular device.

10. A method for performing secure electronic transactions on a public computer network, said network comprising a user's computer (14, 61, 71, 81) and a vendor's server (12, 64, 75, 84), and further comprising a toolbox server (11, 62, 72, 82) and a creditor server (62, 72), or a single server (82) acting as a toolbox server as well as the creditor server,
**characterised in that**
said user's computer (14, 61, 71, 81) has an authentication agent which creates a digital fingerprint of the user's computer hardware characteristics and **in that** the method comprises the steps of: issuing a transaction request from said user's computer (14, 61, 71, 81) to the toolbox server (11, 62, 72, 82), said toolbox server (11, 62, 72, 82) verifying the user's computer hardware characteristics through the digital fingerprint, and the user's computer hardware characteristics stored in the toolbox server, said the toolbox server (11, 62, 72, 82) requesting a confirmation from said user's computer (14, 61, 71, 81) of said transaction upon positively identifying said user's computer hardware characteristics and upon receiving said confirmation providing the vendor's server (12, 64, 75, 84) with a gatepass for receiving a payment commitment from said creditor's server.

11. A method according to claim 10, wherein said user's computer (14, 61, 71, 81) has a gatekeeper and digital fingerprint of the user's computer hardware characteristics stored therein.

12. A method according to claim 11, wherein said confirmation request causes said toolbox server (11, 62, 72, 82) to send a pre-arranged handshake and primer to said gatekeeper, whereupon said gatekeeper allows said toolbox server (11, 62, 72, 82) to request confirmation of said digital fingerprint.

13. A method according to claim 12, wherein said primer comprises a prearranged handshake for the next succeeding occurrence of a transaction confirmation operation.

14. A method according to claim 13, wherein said digital fingerprint is internally confirmed by said user's computer (14, 61, 71, 81) when said transaction request is initiated.

## Patentansprüche

1. System für sichere elektronisches Transaktionen in einem öffentlichen Computernetzwerk, wobei dieses Netzwerk einen Benutzercomputer (14, 61, 71, 81) und einen Server (12, 64, 75, 84) eines Verkäufers sowie einen Toolbox-Server (11, 62, 72, 82) und einen Kreditor-Server (72, 82) umfaßt oder einen einzigen Server (82), der sowohl als Toolbox-Server als auch als Kreditor-Server dient,
**dadurch gekennzeichnet, daß**
der genannte Benutzercomputer (14, 61, 71, 81) einen Authentisierungsagenten hat, der einen digitalen Fingerabdruck der Hardwarekenndaten des Benutzercomputers erstellt, wobei der genannte Toolbox-Server (11, 62, 72, 82) so ausgelegt ist, daß er die Hardwarekenndaten des Benutzercomputers anhand des digitalen Fingerabdrucks und der auf dem Toolbox-Server gespeicherten Hardwarekenndaten des Benutzercomputers verifiziert, wobei, in Reaktion auf eine von dem genannten Benutzercomputer (14, 61, 71, 81) an den Toolbox-Server ausgegebenen Anfrage für eine Transaktion, der genannte Toolbox-Server (11, 62, 72, 82) bei positiver Identifizierung der genannten Hardwarekenndaten des Benutzercomputers eine Bestätigung vom Benutzercomputer (14, 61, 71, 81) über die genannte Transaktion verlangt und, bei Erhalt der genannten Bestätigung, dem genannten Server (12, 64, 75, 84) des Verkäufers eine Zugangsberechtigung (Gatepass) zum Empfang einer Zahlungsverpflichtung von dem genannten Kreditor-Server (72, 82) zur Verfügung stellt.

2. System nach Anspruch 1,
wobei der genannte Toolbox-Server (11, 62, 72, 82) den Benutzercomputer (14, 61, 71, 81) über eine im Benutzercomputer gespeicherten Zugangskontrolle (Gatekeeper) authentifiziert.

3. System nach Anspruch 2,
wobei der genannte Toolbox-Server (11, 62, 72, 82) eine erste Identifikationsnummer an die genannte Zugangskontrolle zur Authentifizierung des Benutzercomputers bei der Registrierung zur Aufnahme in das System übermittelt sowie eine zweite Identifizierungsnummer zum Vorbereiten der genannten Zugangskontrolle auf die Authentifizierung des Benutzercomputers bei einer nachfolgenden Begegnung zwischen dem Benutzercomputer und dem Toolbox-Server.

4. System nach Anspruch 1,
wobei die Transaktion dazu dient, Zugang zu einer gesicherten Datenbank über ein öffentliches Computernetzwerk zu erhalten.

5. System nach Anspruch 1,
wobei die Transaktion dazu dient, um einen Kauf von Waren oder Dienstleistungen zu tätigen.

6. System nach Anspruch 1,
wobei die Transaktion dazu dient, kopiergeschützte Dateien mit Inhalten von einem Computernetzwerk herunterzuladen, wobei die genannten Dateien nur durch den genannten Benutzer herunterladbar sind.

7. System nach Anspruch 6,
wobei die genannten heruntergeladenen Dateien nur auf einem Benutzercomputer (14, 61, 71, 81) abgespielt werden können, der den von dem genannten Server (12, 64, 75, 84) des Verkäufers in die genannte Datei kodierten digitalen Fingerabdruck hat.

8. System nach Anspruch 7,
wobei die genannten heruntergeladenen Dateien nur in einer begrenzten Zahl direkt von dem genannten Benutzercomputer (14, 61, 71, 81) auf andere Sekundärvorrichtungen kopiert werden können, wobei die genannte Anzahl von dem genannten digitalen Fingerabdruck bestimmt wird.

9. System nach Anspruch 1,
wobei die genannte Bestätigungsaufforderung gleichzeitig zu einem Mobilgerät geschickt wird.

10. Verfahren zur Durchführung einer sicheren elektronischen Transaktion in einem öffentlichen Computernetzwerk, wobei dieses Netzwerk einen Benutzercomputer (14, 61, 71, 81) und einen Server (12, 64, 75, 84) eines Verkäufers sowie einen Toolbox-Server (11, 62, 72, 82) und einen Kreditor-Server (62, 72) umfaßt oder einen einzigen Server (82), der sowohl als Toolbox-Server als auch als Kreditor-Server fungiert,
**dadurch gekennzeichnet, daß**
der genannte Benutzercomputer (14, 61, 71, 81) einen Authentisierungsagenten hat, der einen digitalen Fingerabdruck der Hardwarekenndaten des Benutzercomputers erstellt und daß das Verfahren die folgenden Schritte umfaßt:
Ausgeben einer Transaktionsanforderung von dem genannten Benutzercomputer (14, 61, 71, 81) an den Toolbox-Server (11, 62, 72, 82), der genannte Toolbox-Server (11, 62, 72, 82) verifiziert die Hardwarekenndaten des Benutzercomputers mittels des digitalen Fingerabdrucks und der auf dem Toolbox-Server gespeicherten Hardwarekenndaten des Benutzercomputers; der Toolbox-Server (11, 62, 72, 82) fordert den genannten Benutzercomputer (14, 61, 71, 81) zum Bestätigen der genannten Transaktion durch positive Identifizierung der genannten Hardwarekenndaten des Benutzercomputers auf, und bei Erhalt der genannten Bestätigung Bereitstellen einer Zugangserlaubnis (Gatepass) für den genannten Server (12, 64, 75, 84) des Verkäufers zum Empfang einer Zahlungsverpflichtung von dem genannten Kreditor-Server.

11. Verfahren nach Anspruch 10,
wobei der genannte Benutzercomputer (14, 61, 71, 81) eine Zugangskontrolle (Gatekeeper) aufweist und ein digitaler Fingerabdruck der Hardwarekenndaten des Benutzercomputers darin gespeichert ist.

12. Verfahren nach Anspruch 11,
wobei die genannte Bestätigungsaufforderung bewirkt, daß der Toolbox-Server (11, 62, 72, 82) einen vorher festgelegten "Handshake" und Primer an die genannte Zugangskontrolle sendet, woraufhin die genannte Zugangskontrolle dem genannten Toolbox-Server (11, 62, 72, 82) gestattet, eine Bestätigung des genannten digitalen Fingerabdrucks anzufordern.

13. Verfahren nach Anspruch 12,
wobei der genannte Primer einen vorher festgelegten "Handshake" für das nächste darauffolgende Auftreten einer Transaktionsbestätigungsoperation umfaßt.

14. Verfahren nach Anspruch 13,
wobei der genannte digitale Fingerabdruck intern von dem genannten Benutzercomputer (14, 61, 71, 81) bestätigt wird, wenn die genannte Transaktionsaufforderung initiiert wird.

## Revendications

1. Système pour permettre une transaction électronique sécurisée sur un réseau informatique public, ledit réseau comprenant un ordinateur d'utilisateur (14, 61, 71, 81) et un serveur de fournisseur (12, 64, 75, 84) et comprenant en outre un serveur de boîte à outils (11, 62, 72, 82) et un serveur de créancier (72, 82), ou un unique serveur (82) servant à la fois de serveur de boîte à outils et de serveur de créancier,
**caractérisé en ce que**
ledit ordinateur d'utilisateur (14, 61, 71, 81) a un agent d'authentification qui crée une empreinte numérique des caractéristiques matérielles de l'ordinateur d'utilisateur, ledit serveur de boîte à outils (11, 62, 72, 82) étant conçu pour vérifier les caractéristiques matérielles de l'ordinateur d'utilisateur au moyen de l'empreinte numérique et des caractéristiques matérielles de l'ordinateur d'utilisateur stockées dans le serveur de boîte à outils, moyennant quoi en réponse à une demande de transaction émise à partir dudit ordinateur d'utilisateur (14, 61, 71, 81) vers le serveur de boîte à outils, ledit serveur de boîte à outils (11, 62, 72, 82), s'il identifie de manière positive lesdites caractéristiques matérielles de l'ordinateur d'utilisateur, demande une confirmation dudit ordinateur d'utilisateur (14, 61, 71, 81) de ladite transaction et, s'il reçoit ladite confirmation, fournit audit serveur de fournisseur (12, 64, 75, 84) une autorisation de sortie pour recevoir un engagement de paiement dudit serveur de créancier (72, 82).

2. Système selon la revendication 1, dans lequel ledit serveur de boîte à outils (11, 62, 72, 82) authentifie l'ordinateur d'utilisateur (14, 61, 71, 81) par l'intermédiaire d'un portier stocké dans l'ordinateur d'utilisateur.

3. Système selon la revendication 2, dans lequel ledit serveur de boîte à outils (11, 62, 72, 82) transmet audit portier un premier numéro d'identification pour authentifier l'ordinateur d'utilisateur lorsqu'il s'enregistre pour joindre le système et un deuxième numéro d'identification pour amorcer ledit portier pour l'authentification de l'ordinateur d'utilisateur lors d'une rencontre suivante entre l'ordinateur d'utilisateur et le serveur de boîte à outils.

4. Système selon la revendication 1, dans lequel la transaction vise à obtenir l'accès à une base de données sécurisée par l'intermédiaire d'un réseau informatique public.

5. Système selon la revendication 1, dans lequel la transaction vise à effectuer un achat de biens ou de services.

6. Système selon la revendication 1, dans lequel la transaction vise à télécharger des fichiers de contenu protégé contre la copie à partir d'un réseau informatique, moyennant quoi lesdits fichiers ne pourront être téléchargés que par ledit utilisateur.

7. Système selon la revendication 6, dans lequel lesdits fichiers téléchargés ne peuvent être lus que sur un ordinateur d'utilisateur (14, 61, 71, 81) ayant l'empreinte numérique codée dans ledit fichier par ledit serveur de fournisseur (12, 64, 75, 84).

8. Système selon la revendication 7, dans lequel lesdits fichiers téléchargés ne peuvent être copiés qu'un nombre limité de fois directement à partir dudit ordinateur d'utilisateur (14, 61, 71, 81) sur d'autres dispositifs secondaires, ledit nombre limité étant déterminé par ladite empreinte numérique.

9. Système selon la revendication 1, dans lequel ladite demande de confirmation est envoyée en même temps à un dispositif cellulaire.

10. Procédé pour effectuer des transactions électroniques sécurisées sur un réseau informatique public, ledit réseau comprenant un ordinateur d'utilisateur (14, 61, 71, 81) et un serveur de fournisseur (12, 64, 75, 84), et comprenant en outre un serveur de boîte à outils (11, 62, 72, 82) et un serveur de créancier (62, 72), ou un unique serveur (82) servant à la fois de serveur de boîte à outils et de serveur de créancier,
**caractérisé en ce que**
ledit ordinateur d'utilisateur (14, 61, 71, 81) a un agent d'authentification qui crée une empreinte numérique des caractéristiques matérielles de l'ordinateur d'utilisateur et **en ce que** le procédé comprend les étapes consistant à : émettre une demande de transaction à partir dudit ordinateur d'utilisateur (14, 61, 71, 81) vers le serveur de boîte à outils (11, 62, 72, 82), ledit serveur de boîte à outils (11, 62, 72, 82) vérifiant les caractéristiques matérielles de l'ordinateur d'utilisateur au moyen de l'empreinte numérique, et des caractéristiques matérielles de l'ordinateur d'utilisateur stockées dans le serveur de boîte à outils, ledit serveur de boîte à outils (11, 62, 72, 82) demandant une confirmation à partir dudit ordinateur d'utilisateur (14, 61, 71, 81) de ladite transaction s'il identifie de manière positive lesdites caractéristiques matérielles de l'ordinateur d'utilisateur et, s'il reçoit ladite confirmation, fournir au serveur de fournisseur (12, 64, 75, 84) une autorisation de sortie pour recevoir un engagement de paiement dudit serveur de créancier.

11. Procédé selon la revendication 10, dans lequel ledit ordinateur d'utilisateur (14, 61, 71, 81) a un portier et une empreinte numérique des caractéristiques matérielles de l'ordinateur d'utilisateur stockée dans celui-ci.

12. Procédé selon la revendication 11, dans lequel ladite demande de confirmation amène ledit serveur de boîte à outils (11, 62, 72, 82) à envoyer une poignée de main pré-arrangée et une amorce audit portier, sur quoi ledit portier permet audit serveur de boîte à outils (11, 62, 72, 82) de demander une confirmation de ladite empreinte numérique.

13. Procédé selon la revendication 12, dans lequel ladite amorce comprend une poignée de main pré-arrangée pour l'occurrence suivante d'une opération de confirmation de transaction.

14. Procédé selon la revendication 13, dans lequel ladite empreinte numérique est confirmée de manière interne par ledit ordinateur d'utilisateur (14, 61, 71, 81) lorsque ladite demande de transaction est initiée.
